**Europäisches Patentamt**

**European Patent Office**

**Office européen des brevets**

(19)

(11) Veröffentlichungsnummer: **0 403 676**
**A1**

## (12) EUROPÄISCHE PATENTANMELDUNG

(21) Anmeldenummer: **89111325.0**

(22) Anmeldetag: **21.06.89**

(51) Int. Cl.5: **F16J 15/34**

(43) Veröffentlichungstag der Anmeldung:
**27.12.90 Patentblatt 90/52**

(84) Benannte Vertragsstaaten:
**AT BE CH DE FR GB IT LI NL SE**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Huber, Matthias**
**St. Heinrichtstrasse 7**
**D-8193 Holzhausen(DE)**
Erfinder: **Rid, Ulrich, Dipl.-Ing.**
**Königsdorfer Strasse 28 A**
**D-8190 Wolfratshausen(DE)**
Erfinder: **Riedl, Hans Peter, Dipl.-Ing.**
**Schlesierstrasse 5**
**D-8190 Wolfratshausen(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) Gleitringdichtung.

(57) Eine Gleitringdichtung zur Abdichtung einer durch eine Wandung (4) geführten Welle (2), mit einem drehfest an dem Wandung (4) gehaltenen und gegen diese abgedichteten Gleitring (11), der mit seiner Gleitfläche (13) an der Gleitfläche (14) eines drehfest an der Welle (2) gehaltenen Gegenrings (15) anliegt. Der Gleitring (11) ist in Axialrichtung verschiebbar, durch eine Sekundärdichtung (10) abgedichtet und durch die Schließkraft am Dichtspalt im drucklosen Betrieb bestimmende Federn (12) gegen den Gegenring (15) vorgespannt. Der Gegenring (15) ist zwischen den ringförmigen Spannflächen (17a, 19b) einer an der Welle (2) festen Trägerhülse (17) und einer auf dieser drehfest und axial verschieblich angeordneten Stützhülse (19) durch Kraftschluß gehalten. Die Stützhülse (19) ist einerseits durch Verspannungsfedern (20), deren Kraft größer als die der Federn (12) des Gleitrings (11) ist und andererseits durch dem abzudichtenden Druck proportionale hydraulische Kräfte, deren Größe durch die Wahl der Durchmesser von Nebendichtungen der Stützhülse (19) bestimmbar ist, gegen die axial feste Spannfläche (17a) der Trägerhülse (17) vorgespannt. Es wird dadurch der Gegenring im wesentlichen nur solchen axialen Einspannkräften und daraus resultierenden Verformungen ausgesetzt als sie eben bei dem abzudichtenden Druck erforderlich sind, wobei auch der schädliche Einfluß einer differentiellen thermischen Dehnung von Gegenring und seiner Trägeranordnung vermieden wird.

FIG.1

## GLEITRINGDICHTUNG

Die Erfindung betrifft eine Gleitringdichtung zur Abdichtung einer um ihre Achse umlaufenden Welle, welche durch eine Wandung geführt ist, die einen unter Druck stehendes Medium erhaltenden ersten Raum von einem geringeren Druck aufweisenden zweiten Raum trennt, mit einem drehfest an der Wandung gehaltenen und gegen diese abgedichteten Ring, der an seiner ersten axialen Stirnseite eine in einer zur Achse lotrechten Ebene gelegene kreisringförmige Gleitfläche aufweist, und mit einem drehfest an der Welle gehaltenen und gegen diese abgedichteten weiteren Ring, der an seiner ersten axialen Stirnseite eine ebene, kreisringförmige Gleitfläche aufweist, welche an der Gleitfläche des drehfest an der Wandung gehaltenen Rings anliegt, wobei einer der Ringe (Gleitring) zwecks Ausgleich einer axialer Bewegung der Welle und eines Verschleißes der Ringe in Richtung der Achse verschiebbar ist, durch eine Sekundärdichtung mit einem hydraulisch wirksamen Durchmesser abgedichtet ist und durch wenigstens eine die Schließkraft am Dichtspalt im drucklosen Betrieb bestimmende Feder gegen den anderen, axial unbeweglich gehaltenen Ring (Gegenring)vorgespannt ist, und wobei wenigstens einer der Ringe in einer Trägeranordnung gehalten ist, welche an diesem Ring zur Drehmomentübertragung ausschließlich mit Kraftschluß (Reibschluß) angreift und welche eine Trägerhülse enthält, die mit einer ersten ringförmigen Spannfläche an einer in der ersten Stirnseite des Rings ausgebildeten, ebenen, zur Gleitfläche parallelen ersten Anlagefläche anliegt und welche eine drehfest mit der Trägerhülse verbundene Stützhülse enthält, die mit einer axial gegen die erste Spannfläche vorgespannten zweiten ringförmigen Spannfläche an einer in der zweiten Stirnseite des Rings ausgebildeten, ebenen, zur Gleitfläche parallelen zweiten Anlagefläche anliegt.

Bei einer bekannten Gleitringdichtung dieser Art (DE-OS 35 39 100) besitzt der von der Trägeranordnung gehaltene Ring L-förmige Querschnittsform und weist an seiner ersten Stirnseite die Gleitfläche sowie axial diesbezüglich zurückversetzt und radial außerhalb gelegen, die erste ringförmige Anlagefläche auf. Die gesamte zweite Stirnseite bildet die zur Gleitfläche parallele zweite Anlagefläche. Der ebenfalls im Querschnitt L-förmig ausgebildete Trägerring umfaßt den vorerwähnten Ring und übergreift mit seinem radial nach innen vorstehenden Teil den radial äußeren Bereich der ersten Stirnseite des Ringes, wobei an diesem Teil die erste Spannfläche ausgebildet ist, welche an der ersten Anlagefläche des Rings anliegt. In der über die zweite Stirnseite des Ringes axial vorstehende Trägerhülse ist die im Querschnitt rechteckige Stützhülse angeordnet und durch eine Schrumpfverbindung unbeweglich gehalten. Die zweite Anlagefläche des Rings stützt sich gegen die an dieser Trägerhülse ausgebildeten zweiten Spannfläche ab, wobei der Ring in radialer und axialer Richtung sowie zur Drehmoment- Übertragung durch Reibschluß der ersten und zweiten Spann- und Anlage-Flächen gehalten ist.

Die bekannte Trägeranordnung vermeidet zwar weitgehend die schädlichen Beanspruchungen und Verformungen des Rings, welche bei ebenfalls bekannten Trägeranordnungen auftreten, welche den Ring durch Schrumpfverbindung mit radial nach innen gerichteten Kräften in einer Hülse halten. Andererseits muß bei der vorstehend erläuterten bekannten Trägeranordnung die auf die beiden Anlageflächen des Rings einwirkende Axialkraft so groß gewählt werden, daß durch den Reibschluß das im Betrieb auftretende maximale Drehmoment übertragen werden kann, dem der Ring ausgesetzt ist. Dieses Drehmoment ist bei praktisch allen Gleitringkonstruktionen von der am Dichtspalt anliegenden Druckdifferenz abhängig und erreicht seinen Maximalwert bei der größten Druckdifferenz. Bei der bekannten Trägeranordnung ist der Ring immer (unabhängig von der Druckbeaufschlagung der Gleitringdichtung) mit einer so großen Axialkraft eingespannt, daß das maximale Drehmoment übertragen werden kann, mit der Folge, daß daraus resultierende Verformung des Rings auch bei Betriebszuständen (druckloser Zustand bzw. nur geringe abzudichtende Druckdifferenz) hingenommen werden muß, bei denen nur ein geringes Drehmoment zu übertragen ist.

Nachteilig ist ferner, daß die Trägeranordnung der bekannten Gleitringdichtung den Ring praktisch starr haltert. Besteht der Ring einerseits und die die Trägeranordnung bildende Trägerhülse und Stützhülse anderer seits aus Werkstoffen mit unterschiedlichen Wärmedehnungskoeffizienten und/oder sind die beiden genannten Komponenten unterschiedlichen Temperatureinwirkungen ausgesetzt, so können entweder die auf die beiden Anlageflächen des Rings ausgeübten Axialkräfte stark ansteigen, mit der Folge zusätzlicher unerwünschter Verformungen des Rings, oder es können diese Axialkräfte so stark abnehmen, daß die Drehmomentübertragung zwischen Ring und Trägeranordnung nicht mehr in ausreichendem Maße gegeben ist.

Aufgabe der Erfindung ist es, eine Gleitringdichtung der eingangs genannten Art so weiterzubilden, daß deren Trägeranordnung den von ihr gehaltenen Ring im wesentlichen nur in dem Maße axialen Einspannkräften und den daraus resultierenden Verformungen aussetzt, als sie für eine zuverlässige Drehmomentübertragung bei dem jeweils abzudichtenden Druck erforderlich sind, und daß differentielle thermische Dehnungen von Ring und Trägeranordnung nicht zu unerwünschten Änderungen der axialen Einspannkräfte führen.

Diese Aufgabe wird erfindungsgemäß dadurch gelöst, daß die in der Trägeranordnung enthaltene Stützhülse und der ihr zugeordnete Ring in Richtung der Achse wenigstens als Einheit auf der Trägerhülse verschieblich sind, daß wenigstens eine sich gegen ein an der Trägerhülse festes Glied abstützende Verspannungsfeder die Stützhülse in axialer Richtung auf die erste Spannfläche vorspannt, daß die Stützhülse durch eine Nebendichtung mit einem hydraulisch wirksamen Durchmesser gegen die Trägerhülse oder ein daran festes und dichtend verbundenes Bauteil sowie durch eine weitere Nebendichtung gegen den von der Trägeranordnung gehaltenen Ring abgedichtet ist und daß, bezogen auf den Einbauzustand, die gesamte axiale Kraft der Verspannungsfeder(n) größer als die axiale Kraft der die Schließkraft am drucklosen Dichtspalt bestimmenden Feder(n) ist.

Durch diese erfindungsgemäße Ausbildung wird erreicht, daß die Stützhülse mit einer von der Größe der abzudichtenden Druckdifferenz abhängigen Axialkraft an den von der Trägeranordnung gehaltenen Ring angepreßt wird, wobei der Proportionalfaktor durch die Wahl des hydraulisch wirksamen Durchmessers der Nebendichtung zwischen Stützhülse und Trägerhülse bestimmbar ist. Selbstverständlich ist im Sinne der Erfindung dieser Durchmesser ferner so zu bestimmen, daß mit ansteigender Druckdifferenz sich die erwähnte Axialkraft vergrößert. Dementsprechend wachsen auch die an den beiden stirnseitigen Reibungsflächen des Rings übertragbaren Drehmomente mit einer Zunahme der abzudichtenden Druckdifferenz und passen sich so automatisch an das Gleitflächen-Reibungsmoment der im Dichtspalt aneinanderliegenden Ringe an, das ebenfalls mit zunehmender Druckdifferenz ansteigt. Die Trägeranordnung setzt somit den Ring nur den nach dem jeweiligen Betriebszustand der Gleitringdichtung erforderlichen Kräften und damit Verformungen aus. Differenzielle thermische Dehnungen von Ring und Trägeranordnung führen nicht zur Änderung der von der Trägeranordnung auf den Ring ausgeübten Axialkraft, da sie von den Verspannungsfedern aufgenommen werden.

Die gestellte Aufgabe ist aber auch auf einem auf dem gleichen Prinzip beruhenden Weg dadurch lösbar, daß erfindungsgemäß der von der Trägeranordnung getragene Ring in Richtung der Achse auf der Trägerhülse verschieblich ist, daß wenigstens eine sich gegen ein an der die Trägerhülse festes Glied abstützende Verspannungsfeder den Ring in axialer Richtung auf die erste Spannfläche vorspannt, daß der Ring durch eine Nebendichtung mit einem hydraulisch wirksamen Durchmesser gegen die Trägerhülse oder ein damit fest und dichtend verbundenes Bauteil abgedichtet ist und daß, bezogen auf den Einbauzustand, die gesamte axiale Kraft der Verspannungsfeder(n) größer als die axiale Kraft der die Schließkraft am drucklosen Dichtspalt bestimmenden Feder(n) ist.

Der vorerwähnte Lösungsweg führt zu einer Gleitringdichtung mit axial verkürzter Baulänge und geringerem Gestehungspreis, wobei allerdings nur eine stirnseitige Reibungsfläche zur Drehmomentübertragung zur Verfügung steht, so daß der Ring größeren axialen Kräften ausgesetzt werden muß. Dabei ist aber zu berücksichtigen, daß aufgrund des erfindungsgemäßen Prinzips die ausgeübten Axialkräfte mit fallender abzudichtender Druckdifferenz ebenfalls automatisch abnehmen, so daß Verformungen des Rings ebenfalls mit abnehmender Druckdifferenz kleiner werden.

Ausführungsbeispiele der Erfindung werden nachstehend anhand der Zeichnungen erläutert. In den Zeichnungen zeigt:

Fig. 1 einen Längsschnitt durch den oberen Teil einer Gleitringdichtung in einer ersten Ausführungsform;

Fig. 2 einen vergrößerten Teil-Schnitt durch die Ausführungsform gemäß Fig. 1 und

Fig. 3 einen vergrößerten Teil-Schnitt durch eine zweite Ausführungsform, wobei die nicht veranschaulichten Bauteile entsprechend der Fig. 1 ausgebildet sind.

Die um ihre Achse 1 umlaufende Welle 2 erstreckt sich durch die Bohrung 3 in einer stirnseitigen Wandung 4 eines Dichtungsgehäuses 5. Die Wandung 4 trennt einen ersten Raum 6, welcher ein Medium (Flüssigkeit oder Gas) unter einem Druck $p_1$ enthält, von einem zweiten Raum 7, dessen Druck $p_2$ geringer als der Druck $p_1$ ist und der ein gleichartiges oder anderes Medium enthält. Im Bereich der Bohrung 3 steht von der Wandung 4 ein rohrförmiger Kragen 8 zum ersten Raum 6 vor, auf dessen zylindrischer äusserer Umfangsfläche mit dem Durchmesser $d_H$ ein Trägerring 9 axial verschieblich angeordnet und gegen diese Umfangsfläche durch eine Sekundärdichtung 10 abgedichtet ist, welche durch einen O-Ring gebildet ist. Ein (nicht dargestellter) an der Wandung 4 fester achsparalleler Stift steht in eine Sacklochbohrung des Trägerrings 9 ein und hindert diesen formschlüssig an einer Verdrehung. Im Trägerring 9 ist durch Schrumpfsitz ein Ring 11 (Gleitring) unbeweglich und abdichtend gehalten. Eine Mehrzahl von Schraubendruckfedern 12 spannt die aus dem Trägerring 9 und dem Gleit ring 11 bestehende Einheit axial in Richtung zum ersten Raum 6 vor. Der Gleitring 11 weist an seiner dem ersten Raum 6 zugekehrten Stirnseite eine zur Achse 1 konzentrisch angeordnete kreisringförmige Gleitfläche 13 auf, die in einer zu dieser Achse lotrechten Ebene liegt.

Diese Gleitfläche 13 ist mittels der von den Federn 12 und der auf den Gleitring einwirkenden hydraulischen Axialkraft gegen eine ebenfalls in einer zur Achse 1 lotrechten Ebene gelegene Gleitfläche 14 gepreßt, welche an der ersten Stirnseite 15a eines weiteren Rings 15, des Gegenrings,ausgebildet ist.

Dieser Ring 15 besteht vorzugsweise aus Hartmetall oder einem keramischen Werkstoff und hat, abgesehen von möglichen minmalen Vertiefungen im Bereich der Gleitfläche 14, die Gestalt eines im Querschnitt rechteckigen Rotationskörpers, dessen beide Stirnseiten 15a, 15b von Ebenen begrenzt sind, die von der Achse 1 lotrecht durchdrungen sind.

Der Ring 15 wird von einer in ihrer Gesamtheit mit 16 bezeichneten Trägeranordnung gehalten, welche aus einer Trägerhülse 17, einem daran festen, ringförmigen Stützglied 18, einer Stützhülse 19 und einer Mehrzahl von als achsparallele Schraubendruckfedern ausgebildeten Verspannungsfedern 20 besteht. Die Trägerhülse 17 besitzt einen radial nach aussen vorstehenden Bund 17' mit einer ringförmigen Spannfläche 17 a, welche in der gleichen Ebene wie die Gleitfläche 13 des Gleitrings11 liegt und wie diese zum ersten Raum 6 weist. Die Träger hülse 17 bildet auch die Wellenhülse und ist drehfest und axial unverschieblich an der Welle 2 befestigt und durch eine Hilfsdichtung 23 abgedichtet.

Ausgehend von der Spannfläche 17a weist die Trägerhülse 17 eine vom Gegenring 15 umgebene erste zylindrische Umfangsfläche auf, deren Durchmesser und Länge geringfügig kleiner sind als der Innendurchmesser $d_3$ bzw. die axiale Länge des Gegenrings. Anschließend daran besitzt die Trägerhülse 17 eine zweite zylindrische Umfangsfläche mit einem geringeren Durchmesser $d_1$,auf welcher die Stützhülse 19 in Axialrichtung verschieblich geführt ist und gegen welche diese mittels einer Nebendichtung 24 abgedichtet ist. Ein von der Trägerhülse radial vorstehender Stift 26, der in einen achsparallelen Schlitz 27 der Stützhülse 19 einsteht, bewirkt eine drehfeste Verbindung. Die Stützhülse 19 übergreift spielfrei oder mit einer radial nach innen gerichteten Vorspannung einen Teil des äusseren Umfangs des Gegenrings 15 mit einem axial vorspringenden rohrförmigen Kragen 19'. Unmittelbar angrenzend an diesen Kragen ist in der Stirnseite der Stützhülse 19 eine Ringnut 25' ausgebildet, welche einen O-Ring aufnimmt, der eine Nebendichtung 25 zwischen der Stützhülse 19 und dem Gegenring 15 bildet. Die Verspannungsfedern 20 stützen sich einerseits an den Böden von um den Umfang verteilter Sacklochbohrungen 28 und andererseits an dem Stützglied 18 ab, das mit der Trägerhülse 19 fest verbunden ist, beispielsweise durch Schrauben 29, von denen eine durch eine stichpunktierte Linie angegeben ist. Die Verspannungsfeder 20 erteilen dem Stützglied 19 ein Vorspannung in Richtung auf die ersten Spannfläche 17a.

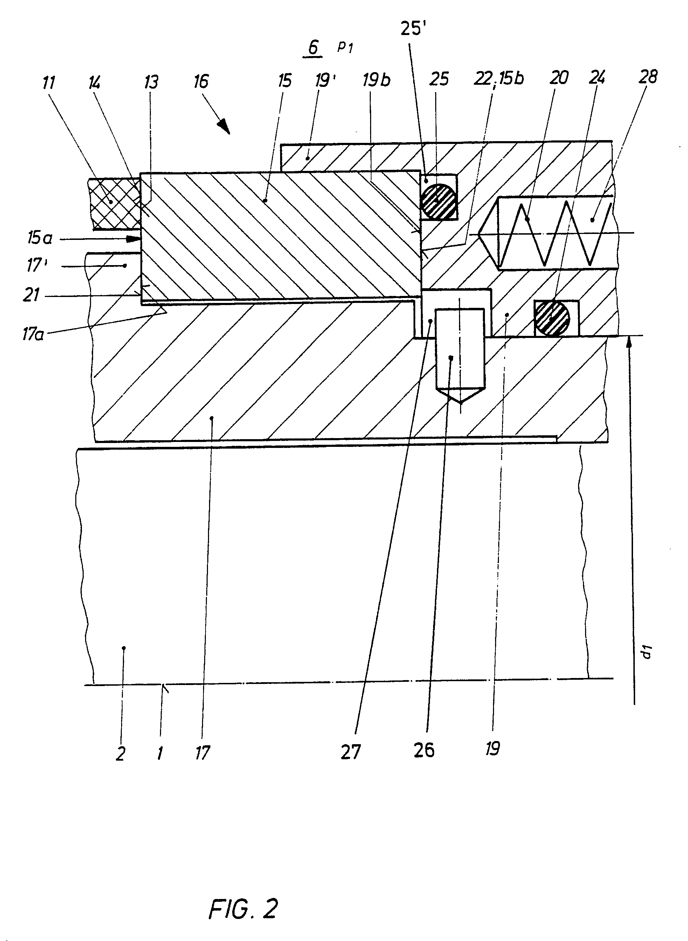

Wie am besten aus Fig. 2 ersichtlich ist, greift die an dem Bund 17' ausgebildete erste Spannfläche 17a an der in der gleichen Ebene wie die Gleitfläche 14 und radial innerhalb dieser an der ersten Stirnseite 15a des Gegenrings 15 gelegenen ersten Anlagefläche 21 an, welche sich bis zur Bohrung des Gegenrings erstreckt. Die der ersten Spannfläche 17a und der ersten Anlagefläche 21 gemeinsame ringförmige Berührungsfläche (Reibungsfläche) weist einen inneren Durchmesser $d_3$ (entsprechend Innendurchmesser Gegenring) und einen äußeren Durchmesser $d_4$ (entsprechend Außendurchmesser des Bundes 17') auf. Die an der Stützhülse 19 ausgebildete zweite Spannfläche 19b drückt gegen die an der zweiten Stirnseite 15b des Gegenrings gelegene zweite Anlagefläche 22, welche sich, ausgehend von der Bohrung des Gegenrings, radial nach außen erstreckt, und zwar bis zu einer nahe dem äußeren Umfang des Gegenrings und in der gleichen Ebene wie die Anlagefläche 22 gelegenen Ringfläche, an welcher die Nebendichtung 25 anliegt. Die der zweiten Spannfläche 19b und der zweiten Anlagefläche 22 gemeinsame ringförmige Berührungsfläche (Reibungsfläche) weist einen inneren Durchmesser $d_3$ und einen äußeren Durchmesser $d_2$ auf. Der Gegenring 15 ist daher zwischen seinen beiden Stirnseiten 15a, 15b über zwei sich wenigstens näherungsweise in axialer Projektion deckenden Reibungsflächen eingespannt, so daß er, soweit es die für die Drehmomentübertragung benötigten Verspannungskräfte betrifft, praktisch ausschließlich nur Druckkräften ausgesetzt ist, und die Reibungskräfte gleichförmig über den Stirnumfang verteilt in den Gegenring eingeleitet werden. Unterschiedliche Wärmedehnungen des Gegenrings 15 und der Bestandteile der Trägeranordnung 16 können sich über die Ver spannungsfedern 28 ausgleichen.

Im folgenden werden die für die Bemessung der Gleitringdichtung wesentlichen Regeln angegeben, wobei zur Vereinfachung die Reibung an den Sekundär- und Nebendichtungen, die Reibung der die Dichtungsbauteile umgebenden Media und die Gewichtskräfte bei Vertikaleinbau vernachlässigt werden, und wobei (ergänzend zu den bereits vorstehend gegebenen Erläuterungen) bedeuten:

$F_1$ Kraft der in der Trägeranordnung enthaltenen Verspannungsfedern 20

$F_2$ Kraft der dem Gleitring 11 zugeordneten Federn 12

$M_G$ Gleitflächenreibmoment = durch die Gleitflächenreibung auf den Gegenring 15 übertragenes Drehmoment

$M_A$ an der ersten Stirnseite 15a des Gegenrings 15 übertragenes Gegenmoment

$M_B$ an der zweiten Stirnseite 15b des Gegenrings 15 übertragenes Gegenmoment

$P_d$ abzudichtende Druckdifferenz $p_1 - p_2$

$\mu_G$ Reibbeiwert der Gleitfläche (Dichtspalt)

$\mu_A$ Reibbeiwert der Reibfläche der ersten Stirnseite 15a

$\mu_B$ Reibbeiwert der Reibungsfläche der zweiten Stirnseite

D äußerer Durchmesser der gemeinsamen Gleitfläche (Dichtfläche) von Gleitring 11 und Gegenring 15

d innerer Durchmesser der gemeinsamen Gleitfläche (Dichtfläche)

$d_1$ hydraulisch wirksamer Durchmesser der Nebendichtung 24 zwischen Stützhülse 19 und Trägerhülse 17.

Zur Erfüllung der Bedingung, daß im Fall $p_d = 0$ die erste Anlagefläche 21 des Gegenrings 15 an der ersten Spannfläche 17a anliegt, sind die Verspannungsfedern 20 in Abhängigkeit von den Federn 12 des Gleitrings 11 so zu dimensionieren, daß

(I)     $F_1 > F_2$

wird.

Darüber hinaus sind die Verspannungsfedern 20 und die Durchmesser der Gleit-, Reib- und Dichtungsflächen abhängig von den Reibbeiwerten so auszulegen, daß sowohl im Fall $p_d = 0$ als auch im Fall $p_d > 0$ die von den Bauteilen der Trägeranordnung 16 auf die beiden stirnseitigen Reibflächen des Gegenrings 15 übertragenen Gegenmomente $M_A$ und $M_B$ größer als das Gleitflächen-Reibungsmoment $M_G$ werden, d. h.

(II)     $M_A + M_B > M_G$

wobei sich das Gleitflächen-Reibungsmoment errechnet zu

$$(\mathrm{III}) \quad M_G = \frac{(D + d)}{4} \cdot \mu_G \cdot \left[ \frac{\pi}{4} \cdot (D^2 - d_H^2) \cdot p_d + F_2 \right]$$

und sich das erzielbare gesamte Gegenmoment errechnet zu

$$(\mathrm{IV}) \quad M = M_A + B_B$$
$$= \frac{(d_4 + d_3)}{4} \cdot \mu_A \cdot \left[ \frac{\pi}{4} \cdot (d_H^2 - d_1^2) \cdot p_d + F_1 - F_2 \right]$$
$$+ \frac{(d_2 + d_3)}{4} \cdot \mu_B \cdot \left[ \frac{\pi}{4} \cdot (d_2^2 - d_1^2) \cdot p_d + F_1 \right]$$

Gemäß Formel (III) steigt das Gleitflächen-Reibmoment $M_G$, ausgehend von einem relativ geringen Wert bei $p_d = 0$ bis zu einem Maximalwert bei der abzudichtenden maximalen Druckdifferenz $p_{dmax}$ an. Wesentlich ist nun, daß es die konstruktive Ausbildung der Erfindung erlaubt, den Gegenring 15 von seiner Trägeranordnung 16 nur bei maximaler Druckdifferenz $p_{dmax}$ mit den größten Verspannungskräften zu beaufschlagen, während sich mit kleiner werdender Druckdifferenz die Einspannkräfte selbständig reduzieren und zwar näherungsweise so, daß auf den Gegenring nur die für seine sichere Drehmomentübertragung jeweils benötigten Einspannkräfte einwirken.

Die von der Trägeranordnung 16 herrührenden Verformungen des Gegenrings 15 und seiner Gleitfläche 14 können folglich bei einer kleinen abzudichtenden Druckdifferenz $p_d$ auf vernachlässigbar geringen Werten gehalten werden.

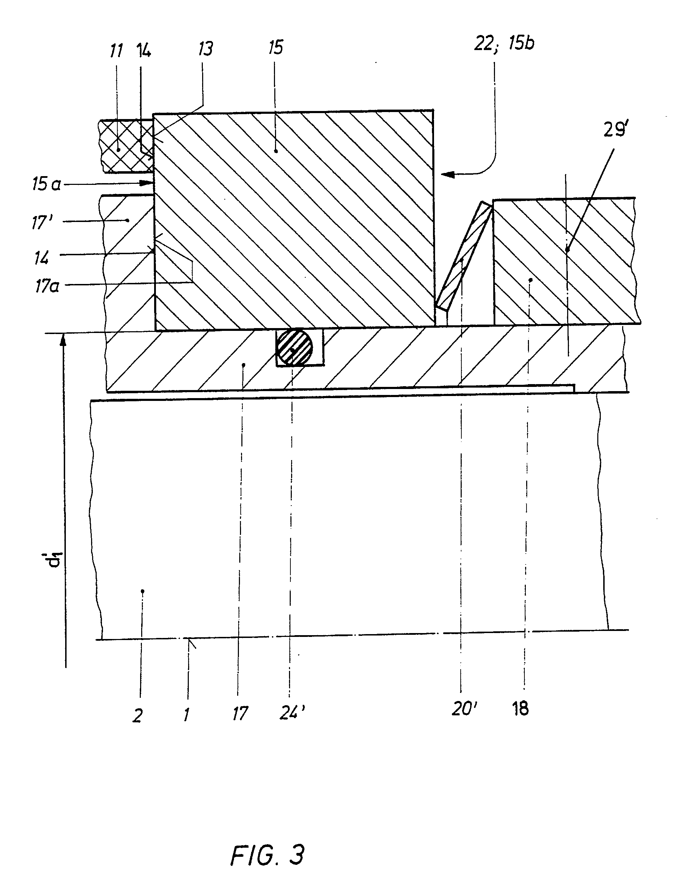

Bei der in Fig. 3 veranschaulichten vereinfachten zweiten Ausführungsform ist die sich gegen das Stützglied 18 abstützende Verspannungsfeder 20' als Tellerfeder ausgebildet, welche unmittelbar am Gegenring 15 an dessen zweiter axialer Stirnseite 15b anliegt. Auch die von der abzudichtenden Druckdifferenz $p_d$ hervorgerufene Axialkraft wirkt unmittelbar auf den Gegenring 15 ein. Bei der Bemessung der zweiten Ausführungsform, welche eine kostengünstigere und axial kürzere Ausbildung erlaubt, ist allerdings zu berücksichtigen, daß das gesamte Gegenmoment von der an der ersten Stirnseite 15a gelegenen Reibungsfläche übertragen werden muß.

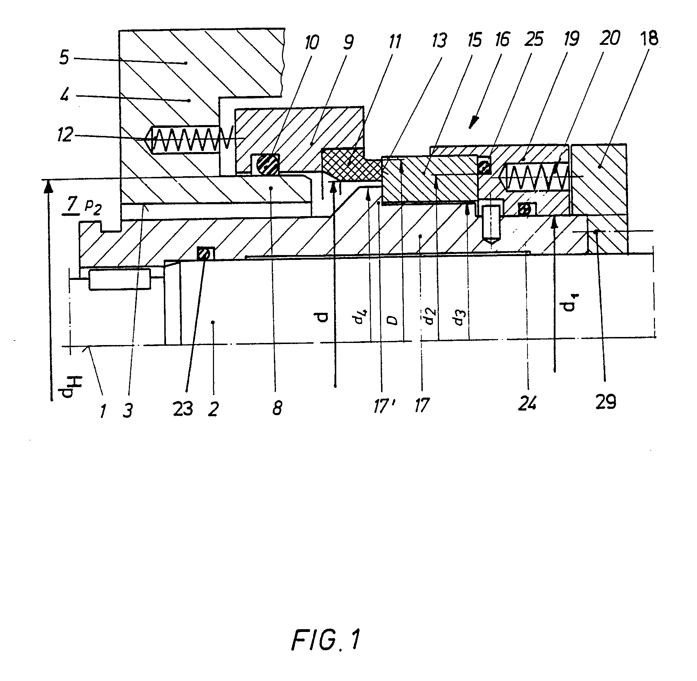

Die beiden vorstehenden Ausführungsbeispiele beziehen sich jeweils auf Gleitringdichtungen, bei denen der in einer erfindungsgemäß ausgebildeten Trägerhülse 16 eingespannte Ring 15 den mit der Welle 2 umlaufenden Gegenring bildet. Dabei wird unter Gegenring derjenige von den beiden in einer Gleitringdichtung enthaltenen und an einer, die relative Drehbewegung zwischen Welle und Dichtungsgehäuse aufnehmenden Gleitdichtfläche aneinanderliegenden Ringe verstanden, welcher betriebsmäßig in seiner Axiallage fixiert ist und welcher mit einem Gleitring zusammenwirkt, der betriebsmäßig in Axialrichtung gegen die Wirkung von Federn verschieblich ist (in Fig. 1 die Schraubendruckfedern 12), so daß er Axialbewegungen der Welle 2 folgen kann und bei einem Verschleiß der Ringe in Axialrichtung nachsetzen kann, wobei seine Federn und der hydraulisch wirksame Durchmesser seiner Sekundärdichtung (in Fig. 1 der O-Ring 10) die Flächenpressung an der Gleitfläche bestimmen.

Weitere, nicht dargestellte Ausführungsformen der Erfindung können darin bestehen, daß die erfindungsgemäß ausgebildete Trägeranordnung für die Halterung des Gleitringes eingesetzt wird, wobei die Trägeranordnung in ihrer Gesamtheit gegen Federn in Axialrichtung verschieblich ist. Es können auch beide Ringe (Gleitring und Gegenring) jeweils in einer erfindungsgemäß ausgebildeten Trägeranordnung eingespannt sein. Auch ist eine Ausführungsform möglich, bei der die inneren Umfänge von Gleitring und Gegenring mit dem höheren Druck beaufschlagt werden.

Wesentlich ist aber in jedem Fall, daß der von der Trägeranordnung gehaltene Ring an derjenigen Stirnseite, welche auch seine Gleitfläche enthält, mit einer der Übertragung eines Gegenmoments dienenden Reibungsfläche an einer Spannfläche anliegt, und daß dieser Ring an der genannten Spannfläche angedrückt wird einerseits durch die Kraft von Verspannungsfedern und andererseits durch eine hydraulisch erzeugte Kraft, die (durch entsprechende Wahl der Durchmesser von Nebendichtungen) mit zunehmender abzudichtender Druckdifferenz $p_d$ ansteigt.

## Ansprüche

1. Gleitringdichtung zur Abdichtung einer um ihre Achse (1) umlaufenden Welle (2), welche durch eine Wandung (4) geführt ist, die einen ein unter Druck ($p_1$) stehendes Medium enthaltenden ersten Raum (6) von einem geringeren Druck ($p_2$) aufweisenden zweiten Raum (7) trennt,
mit einem drehfest an der Wandung (4) gehaltenen und gegen diese abgedichteten Ring (11), der an seiner ersten axialen Stirnseite eine in einer zur Achse (1) lotrechten Ebene gelegene kreisringförmige Gleitfläche (13) aufweist, und
mit einem drehfest an der Welle (2) gehaltenen und gegen diese abgedichteten weiteren Ring (15), der an seiner ersten axialen Stirnseite (15a) eine ebene, kreisringförmige Gleitfläche (14) aufweist, welche an der Gleitfläche (13) des drehfest an der Wandung gehaltenen Rings (11) anliegt,
wobei einer der Ringe (Gleitring) (11) zwecks Ausgleich einer axialen Bewegung der Welle (2) und eines Verschleißes der Ringe (11, 15) in Richtung der Achse (1) verschiebbar ist, durch eine Sekundärdichtung (10) mit einem hydraulisch wirksamen Durchmesser ($d_H$) abgedichtet ist und durch wenigstens eine die Schließkraft am Dichtspalt im drucklosen Betrieb bestimmende Feder (12) gegen den anderen, axial unbeweglich gehaltenen Ring (Gegenring) (15) vorgespannt ist,
und wobei wenigstens einer der Ringe (15) in einer Trägeranordnung (16) gehalten ist, welche an diesem Ring zur Drehmomentübertragung ausschließlich mit Kraftschluß (Reibschluß) angreift und welche eine Trägerhülse (17) enthält, die mit einer ersten ringförmigen Spannfläche (17a) an einer in der ersten Stirnseite (15a) des Rings (15) ausgebildeten, ebenen, zur Gleitfläche (14) parallelen ersten Anlagefläche (21) anliegt und welche eine drehfest mit der Trägerhülse (17) verbundene Stützhülse (19) enthält, die mit einer axial gegen die erste Spannfläche (17a) vorgespannten zweiten ringförmigen Spannfläche (19b) an einer in der zweiten Stirnseite (15b) des Rings (15) ausgebildeten, ebenen, zur Gleitfläche (14) parallelen zweiten Anlagefläche (22) anliegt, **dadurch gekennzeichnet,**
daß die in der Trägeranordnung (16) enthaltene Stützhülse (19) und der ihr zugeordnete Ring (15) in Richtung der Achse (1) wenigstens als Einheit auf der Trägerhülse (17) verschieblich sind,
daß wenigstens eine sich gegen ein an der Trägerhülse (17) festes Glied (78) abstützende Verspannungsfeder (20) die Stützhülse (19) in axialer Richtung auf die erste Spannfläche (17a) vorspannt,
daß die Stützhülse (19) durch eine Nebendichtung (24) mit einem hydraulisch wirksamen Durchmesser ($d_1$) gegen die Trägerhülse (17) oder ein daran festes und dichtend verbundenes Bauteil sowie durch eine weitere Nebendichtung (25) gegen den von der Trägeranordnung (16) gehaltenen Ring (15) abgedichtet ist und
daß, bezogen auf den Einbauzustand, die gesamte axiale Kraft der Verspannungsfedern(n) (20) größer als die axialer Kraft der die Schließkraft am drucklosen Dichtspalt bestimmenden Feder(n) (12) ist.

2. Gleitringdichtung zur Abdichtung einer um ihre Achse (1) umlaufenden Welle (2), welche durch eine Wandung (4) geführt ist, die einen ein unter Druck ($p_1$) stehendes Medium enthaltenden ersten Raum (6) von einem geringeren Druck ($p_2$) aufweisenden zweiten Raum (7) trennt,

mit einem drehfest an der Wandung (4) gehaltenen und gegen diese abgedichteten Ring (11), der an seiner ersten axialen Stirnseite eine in einer zur Achse (1) lotrechten Ebene gelegene kreisringförmige Gleitfläche (13) aufweist, und

mit einem drehfest an der Welle (2) gehaltenen und gegen diese abgedichteten weiteren Ring (15), der an seiner ersten axialen Stirnseite (15a) eine ebene, kreisringförmige Gleitfläche (14) aufweist, welche an der Gleitfläche (13) des drehfest an der Wandung gehaltenen Rings (11) anliegt,

wobei einer der Ringe (Gleitring) (11) zwecks Ausgleich einer axialen Bewegung der Welle (2) und eines Verschleißes der Ringe (11 ,15) in Richtung der Achse (1) verschiebbar ist, durch eine Sekundärdichtung (10) mit einem hydraulisch wirksamen Durchmesser ($d_H$) abgedichtet ist und durch wenigstens eine die Schließkraft am Dichtspalte im drucklosen Zustand bestimmenden Feder (12) gegen den anderen, axial unbeweglich gehaltenen (Gegenring) (15) vorgespannt ist,

und wobei wenigstens einer der Ringe (15) in einer Trägeranordnung (16) gehalten ist, welche an diesem Ring zur Drehmomentübertragung ausschließlich mit Kraftschluß (Reibschluß) angreift und welche eine Trägerhülse (17) enthält, die mit einer ersten ringförmigen Spannfläche (17a) an einer in der ersten Stirnseite (15a) des Rings (15) ausgebildeten, ebenen, zur Gleitfläche (14) parallelen ersten Anlagefläche (21) anliegt und welche auf die in der zweiten Stirnseite (15b) des Rings (15) ausgebildeten, ebenen, zur Gleitfläche (14) parallelen zweiten Anlagefläche (22) eine axiale Kraft ausübt, **dadurch gekennzeichnet,**

daß der von der Trägeranordnung (16) getragene Ring (15) in Richtung der Achse (1) auf der Trägerhülse (17) verschieblich ist,

daß wenigstens eine sich gegen ein an der die Trägerhülse (17) festes Glied (18) abstützende Verspannungsfeder (20) den Ring (15) in axialer Richtung auf die erste Spannfläche (17a) vorspannt,

daß der Ring (15) durch eine Nebendichtung (24') mit einem hydraulisch wirksamen Durchmesser ($d_1'$) gegen die Trägerhülse (17) oder ein damit fest und dichtend verbundenes Bauteil abgedichtet ist und

daß bezogen auf den Eibauzustand, die gesamte axiale Kraft der Verspannungsfeder(n) (20') größer als die axiale Kraft der die Schließkraft am drucklosen Dichtspalt bestimmenden Feder(n) (12) ist.

3. Gleitringdichtung nach Anspruch 1 oder 2, **dadurch gekennzeichnet,** daß die Nebendichtung (24; 24') einen hydraulisch wirksamen Durchmesser ($d_1$; $d_1'$) aufweist, der bei Beaufschlagung der äusseren Umfänge der Ringe (11, 15) mit dem höheren Druck ($p_1$) kleiner ist als der hydraulisch wirksame Durchmesser ($d_H$) der Sekundärdichtung (10).

4. Gleitringdichtung nach Anspruch 1 oder 2, **dadurch gekennzeichnet,** daß der von der Trägeranordnung (16) gehaltene Ring (15) ein im Querschnitt rechteckiger Rotationskörper ist, dessen zylindrische Bohrung koaxial zur Achse (1) der Welle (2) verläuft.

5. Gleitringdichtung nach Anspruch 1 oder 4, **dadurch gekennzeichnet,** daß die Stützhülse (19) einen axial über ihre zweite Spannfläche (19b) vorstehenden rohrförmigen Kragen (19') aufweist, der eine zylindrische Umfangsfläche des von der Trägeranordnung (16) gehaltenen Rings (15) wenigstens auf einen Teil ihrer axialen Erstreckung eng anliegend umfaßt.

6. Gleitringdichtung nach Anspruch 5, **dadurch gekennzeichnet,** daß der Kragen (19') eine radial äussere Umfangsfläche des Rings (15) umfaßt.

7. Gleitringdichtung nach Anspruch 1 oder 4, **dadurch gekennzeichnet,** daß die zwischen dem Ring (15) und der Stützhülse (19) vorgesehene weitere Nebendichtung (25) benachbart zur äusseren Umfangsfläche des Rings (15) angeordnet ist.

8. Gleitringdichtung nach Anspruch 1 oder 2, **dadurch gekennzeichnet,** daß die in der Trägeranordnung (16) enthaltenen Verspannungsfedern (20; 20') als Tellerfedern ausgebildet sind.

FIG.1

FIG. 2

11 14        13        15                    22; 15b

                                                              29'

15 a

17'

14

17a

d'₁

2      1      17      24'                    20'      18

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 933 919 (SULZER AG) <br> * ganzes Dokument * <br> --- | 1,2 | F 16 J 15/34 |
| D,A | DE-A-3 539 100 (OSAKEYHTIÖ SAFEMATIC LTD) <br> ----- | | |
| | | | **RECHERCHIERTE SACHGEBIETE (Int. Cl.5)** |
| | | | F 16 J |

Der vorliegende Recherchenbericht wurde für alle Patentansprüche erstellt

| Recherchenort | Abschlußdatum der Recherche | Prüfer |
|---|---|---|
| BERLIN | 17-01-1990 | HOFFMANN M.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
    Dokument

EPO FORM 1503 03.82 (P0463)